# FASCICULE DE BREVET EUROPEEN

(11) **EP 1 296 792 B1**
(45) Date de publication et mention de la délivrance du brevet: **20.12.2006**
(21) Numéro de dépôt: 01929722.5
(22) Date de dépôt: 26.04.2001
(51) Int. Cl.: B23B 51/02, E21B 10/44

(54) **FORET DE PERCAGE**
BOHRWERKZEUG
PERFORATING DRILL

(30) Priorité: 05.05.2000 FR 0005813
(43) Date de publication de la demande: 02.04.2003
(73) Titulaire: DIAGER, 39800 Poligny (FR)
(72) Inventeur: DEFOUGERES, François, F-39800 Poligny (FR); RIGOLET, Pierre, F-39800 Montholier (FR); LAMY, Sylvain, F-39800 Poligny (FR)
(74) Mandataire: Bratel, Gérard
(86) Numéro de dépôt international: PCT/FR2001/001288
(87) Numéro de publication internationale: WO 2001/085373

(56) Documents cités:
- DE-A- 3 826 239
- DE-B- 2 013 327
- US-A- 2 322 894

## Description

La présente invention concerne de façon générale les outils de forage rotatifs et, plus particulièrement, les forets de perçage.

Les outils de forage et notamment les forets possèdent habituellement un corps de forme générale cylindrique, terminé par une tête, et ils disposent en général, sur au moins une partie de la longueur de leur corps, d'une ou plusieurs gorges d'évacuation hélicoïdales, destinées à transporter les résidus (poussières), formés lors du perçage, hors de la zone de travail de la tête et hors du trou foré. Ces gorges sont constituées habituellement par une ou plusieurs rampes lisses hélicoïdales, qui assurent l'évacuation des poussières grâce au mouvement de rotation de l'outil, suivant le principe de la vis d'Archimède. Dans ce mode d'évacuation, les poussières de perçage sont « passives » ; elles ne participent pas au processus d'évacuation.

Par expérience, on sait que si la capacité d'évacuation des gorges n'est pas suffisante, ou est inefficace, une accumulation des poussières peut avoir lieu au fond du trou en cours de perçage ; dans ce cas, la granulométrie de ces dernières va en diminuant et les fines particules ainsi créées s'accumulent ; elles obturent alors les espaces d'évacuation au fond du trou, et usent de manière plus importante l'insert en carbure et l'acier présents sur la tête du foret et sur le corps de l'outil. De plus, cette accumulation de poussières engendre au fond du trou une mise en pression. Ce dernier phénomène peut participer à l'évacuation : en effet, au-dessus d'une certaine valeur de pression il y a un phénomène de détente (échappement) des poussières accumulées qui sont alors évacuées de la zone de travail. Cependant, il est nécessaire d'éviter des mises en pression trop importantes, en ménageant au niveau des gorges d'évacuation une capacité suffisante pour éviter que celles-ci ne soient obturées, notamment près de la tête de l'outil ; des mises en pression successives trop importantes au fond du trou provoquent des à-coups au cours du perçage, lors des phénomènes d'échappement des poussières accumulées (détente) ; ce mode de fonctionnement est préjudiciable aux performances du foret, en termes de rapidité de perçage d'une part, et en termes de longévité d'autre part, car les mises en pression successives au niveau de la tête du foret et/ou dans le taillage, génèrent des contraintes qui participent à l'endommagement de celui-ci. Actuellement, sur les forets, cette mise en pression n'est pas canalisée, et on cherche au maximum à l'éviter en ménageant simplement une bonne capacité d'évacuation des gorges.

Les documents DE 3826239 A, US 2322894 A et DE 2013327 B décrivent des forets à gorges hélicoïdales, du genre ici concerné, dans lesquels une partie ou la totalité de la surface desdites gorges comporte des stries ou des cannelures, à finalités diverses : réduction du frottement, optimisation de l'opération de coupe, optimisation du réaffûtage, transport des débris par vibration. Dans tous ces documents, les stries ou cannelures, de faibles dimensions, correspondent à un état de surface d'un foret déjà ébauché, et leur effet est celui d'une action de surface. L'obtention desdites stries ou cannelures peut aussi représenter une opération complexe et coûteuse, dans la fabrication de ces forets.

Face à cet état de la technique, le but de l'invention est d'améliorer les performances des outils de perçage, en termes de rapidité et de longévité, tout en permettant une réduction des coûts de réalisation des outils concernés.

A cet effet, l'invention a essentiellement pour objet un foret de perçage dans lequel la ou les gorges d'évacuation sont délimitées, sur au moins une partie de leur longueur, par une succession de facettes, accolées les unes aux autres.

Ainsi, l'idée principale de l'invention réside dans le fait que les gorges d'évacuation des poussières, qui résultent du matériau foré par l'outil, ne sont plus constituées par une forme hélicoïdale continue, mais par des petites faces successives, dites "facettes" raccordées l'une à l'autre, qui peuvent présenter des formes diverses. Plus particulièrement, les facettes sont obtenues pour la réalisation de gorges multiples, suivant des génératrices hélicoïdales ou non, qui suivent une trajectoire s'éloignant et se rapprochant alternativement, régulièrement ou non, de l'axe longitudinal du foret. Ces génératrices, qui sont décalées angulairement et/ou axialement les unes par rapport aux autres, permettent de générer des gorges d'évacuation des poussières. Les formes des facettes, définissant les gorges d'évacuation, peuvent être régulières ou non régulières, plates ou concaves ou convexes et plus ou moins complexes. Ces facettes peuvent être raccordées les unes aux autres par des arêtes vives, ou par des rayons de raccordement, de forme convexe ou concave.

Plus particulièrement, la succession de facettes est agencée de manière à former, sur tout ou partie de la longueur de chaque gorge d'évacuation, une alternance de portions de profondeur et/ou de largeur moins importante, dites « couloirs de compression », et de portions de profondeur et/ou de largeur plus importante, dites « chambres de dépression ». Ces variations de profondeur et/ou de largeur peuvent être plus ou moins régulières ou, au contraire, aléatoires.

Une telle configuration permet, lors de l'utilisation du foret, d'exploiter et d'entretenir localement, dans les gorges d'évacuation, un phénomène de mise en pression et dépression des poussières de perçage pour améliorer leur évacuation. Ainsi, dans un premier temps, la poussière est comprimée au niveau des « couloirs de compression », accumulant ainsi de l'énergie ; puis il y a restitution de cette énergie emmagasinée, lors de la détente de la poussière au niveau des « chambres de dépression ». De plus, le contrôle constant de la mise en pression des poussières de perçage, tout au long du corps de l'outil, empêche que celles-ci ne retombent au fond du trou foré, sous l'effet de la gravité.

Il est clair que la succession de facettes du foret de perçage, objet de l'invention, définit la configuration spatiale ou volumique des gorges de ce foret, autrement dit définit la forme globale du foret, et n'est pas assimilable à un état de surface, tel que celui résultant des stries ou cannelures dans les documents antérieurs cités plus haut. Compte tenu des explications précédentes, il apparaît aussi que la succession de facettes réalise, au cours de l'utilisation du foret, une action volumique et non une action de surface.

Cette configuration a aussi pour conséquence éventuelle de faire varier l'épaisseur de l'âme et/ou des listels (ou cordons de guidage) du foret, suivant que le profil est symétrique ou non par rapport à l'axe longitudinal de l'outil. Dans ce dernier cas, les irrégularités au niveau des listels permettent d'optimiser la fonction de guidage du foret (par la présence de zones « larges ») dans le trou, tout en limitant le frottement contre les parois du trou (par la présence de zones « étroites »). De plus, dans les zones où le listel est large, on obtient un support de résistance à la compression au niveau des rayons de raccordement, ou des raccordements d'une autre forme, qui constituent les « couloirs de compression ».

Grâce à ce fonctionnement, et notamment à l'effet de mise en pression/dépression entretenu, le processus d'évacuation des poussières est renforcé, et il peut être optimisé en rendant le volume offert à l'évacuation suffisamment important. L'on obtient ainsi une amélioration de la rapidité de perçage, qui permet elle-même d'améliorer la longévité du foret, la meilleure évacuation des poussières limitant les efforts sur le corps de l'outil.

Par ailleurs, alors que les gorges d'évacuation des forets classiques sont obligatoirement obtenues par un usinage hélicoïdal continu, les facettes délimitant les gorges d'évacuation du foret objet de l'invention sont réalisables par un passage rectiligne ou non d'un ou plusieurs outils avec enlèvement de matière, mais aussi par des procédés de déformation de la matière constituant le corps du foret, notamment par forgeage, ce qui peut réduire les coûts de fabrication des forets concernés.

L'invention sera mieux comprise à l'aide de la description qui suit, en référence au dessin schématique annexé représentant, à titre d'exemples, quelques formes d'exécution de ce foret de perçage.
Figure 1 est une vue de côté d'un foret conforme à l'invention, dans une première forme de réalisation ;
Figure 2 est une vue partielle en perspective, à échelle agrandie, montrant le détail de la région de la tête du foret de figure 1 ;
Figure 3 est une autre vue de côté de ce foret, suivant la flèche F1 de figure 1 ;
Figure 4 est une vue en coupe transversale du même foret, suivant V-IV de figure 3 ;
Figure 5 en est une autre vue en coupe transversale, suivant V-V de figure 3 ;
Figure 6 est une vue de côté d'un foret conforme à l'invention, dans une deuxième forme de réalisation ;
Figure 7 est une vue partielle en perspective, à échelle agrandie, montrant le détail de la région de la tête du foret de figure 6 ;
Figure 8 est une autre vue de côté de ce foret, suivant la flèche F2 de figure 6 ;
Figure 9 est une vue en coupe transversale du même foret, suivant IX-IX de figure 8 ;
Figure 10 en est une autre vue en coupe, suivant X-X de figure 8;
Figure 11 est une vue de côté d'un foret conforme à l'invention, dans une troisième forme de réalisation ;
Figure 12 est une vue partielle en perspective, à échelle agrandie, montrant le détail de la région de la tête du foret de figure 11 ;
Figure 13 est une autre vue de côté de ce foret, suivant la flèche F3 de figure 11 ;
Figure 14 est une vue en coupe transversale du même foret, suivant XIV-XIV de figure 13 ;
Figure 15 en est une autre vue en coupe transversale, suivant XV-XV de figure 13 ;
Figure 16 est une vue de côté d'un foret conforme à l'invention, dans une quatrième forme de réalisation ;
Figure 17 est une vue partielle en perspective, à échelle agrandie, montrant le détail de la région de la tête du foret de figure 16 ;
Figure 18 est une autre vue de côté de ce forêt, suivant la flèche F4 de figure 16 ;
Figure 19 est une vue en coupe transversale du même foret, suivant XIX-XIX de figure 18 ;
Figure 20 en est une autre vue en coupe transversale, suivant XX-XX de figure 18.

Les figures représentent diverses formes de réalisation d'un foret de perçage, comprenant de façon générale un corps de foret 2 d'allure cylindrique, se terminant à une extrémité par une tête 3 pourvue d'un insert en carbure 4, tandis que l'autre extrémité (non visible) du corps de foret 2 est prévue pour son serrage. Sur au moins une fraction de la longueur du corps de foret 2, à partir de la tête 3, s'étendent des gorges d'évacuation 5, d'allure généralement hélicoïdale, qui servent à l'évacuation des poussières au cours du forage d'un trou par le foret. Les gorges d'évacuation 5 sont séparées les unes des autres par des parties en relief 6, d'allure généralement hélicoïdale, désignées habituellement comme « listels ».

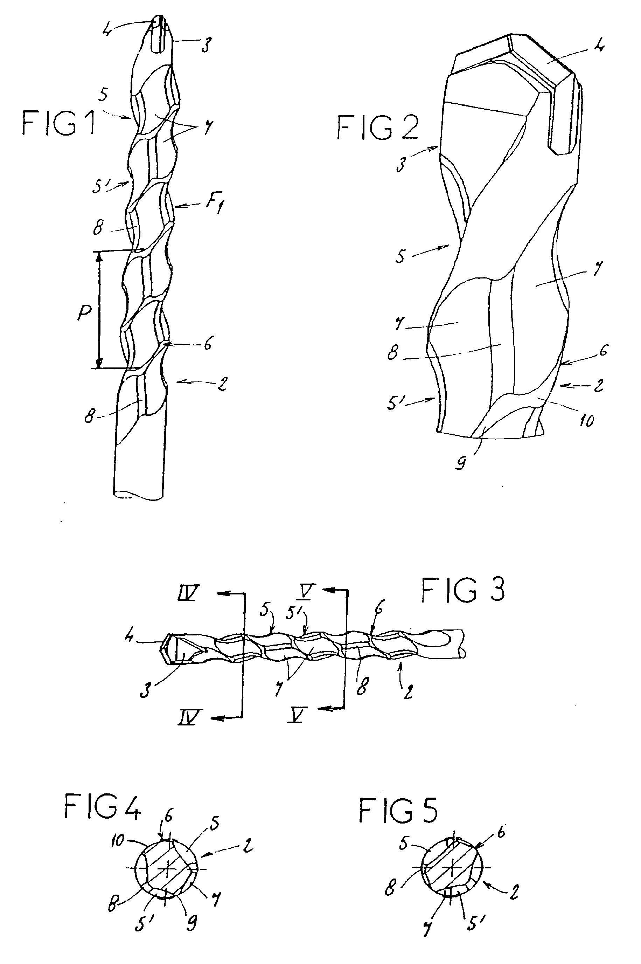

Selon l'invention, chaque gorge d'évacuation 5 est délimitée par une succession de facettes 7. Plus particulièrement, dans la première forme de réalisation illustrée aux figures 1 à 5, les facettes 7 des gorges d'évacuation 5 sont raccordées les unes aux autres par des zones de raccordement 8 qui possèdent un certain rayon de courbure.

Les listels 6 présentent, quant à eux, une alternance régulière ou irrégulière de zones étroites 9 et de zones larges 10.

Dans l'exemple représenté aux figures 1 à 5, le foret possède deux gorges d'évacuation 5 et 5' et les formes précédemment décrites, tant pour ces gorges 5 et 5' que pour les listels 6, se répètent selon un pas P.

Au cours de l'utilisation du foret, les facettes 7 des gorges d'évacuation 5 et 5' constituent, avec la paroi du trou foré, des « chambres de dépression », tandis que les zones de raccordement 8 font office de « couloirs de compression ».

Les deux gorges 5 et 5', avec leurs facettes 7 et leurs rayons de raccordement 8, sont ici réalisables par un taillage multigorges suivant des génératrices hélicoïdales qui suivent une trajectoire s'éloignant et se rapprochant alternativement, régulièrement ou non, de l'axe longitudinal du foret, ces génératrices étant décalées angulairement et axialement d'une gorge à l'autre, pour engendrer les formes particulières des gorges d'évacuation 5 et 5', avec leurs facettes 7 et leurs rayons de raccordement 8.

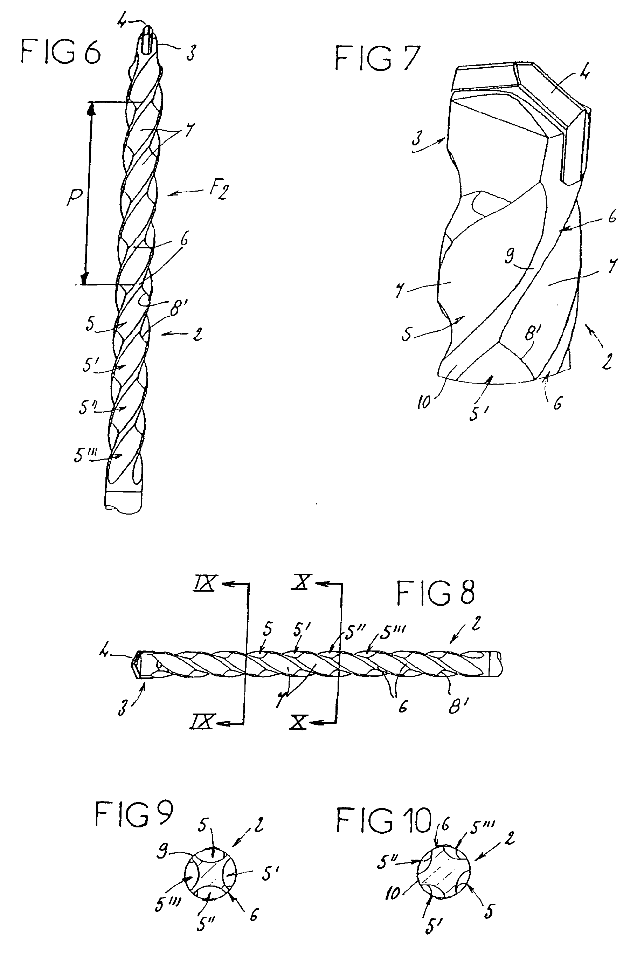

Les figures 6 à 10 illustrent une première variante du foret objet de l'invention, les éléments correspondant à ceux décrits précédemment y étant désignés par les mêmes repères numériques.

Dans cette variante, le corps de foret 2 présente quatre gorges d'évacuation 5, 5', 5" et 5'", d'allure généralement hélicoïdale. Ces gorges sont caractérisées par des facettes 7 successives, de profil arrondi, qui se raccordent suivant des lignes 8' formant des arêtes, sans rayon de raccordement. De plus, d'une gorge à une autre, les génératrices définissant les facettes 7 et leurs raccordements 8' présentent un décalage axial, mais ne possèdent aucun décalage angulaire.

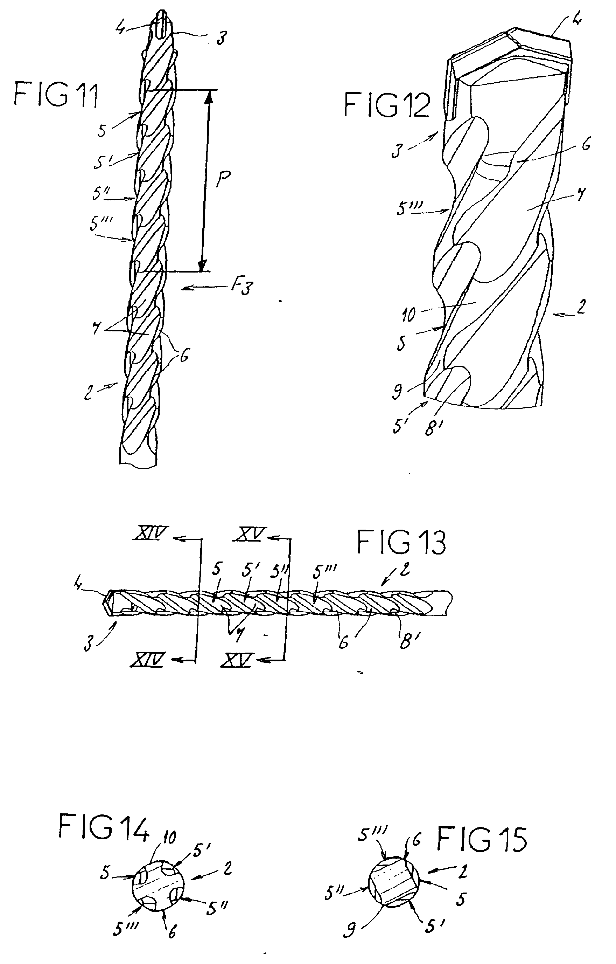

Les figures 11 à 15 illustrent une deuxième variante, proche de la forme de réalisation des figures 6 à 10 et comportant encore, en particulier, un corps de foret 2 avec quatre gorges d'évacuation 5, 5', 5" et 5"'. Les facettes 7 de ces gorges comportent, ici aussi, des raccordements 8' sans rayon, et elles sont définies par des génératrices présentant un décalage axial, mais ne possédant aucun décalage angulaire d'une gorge à l'autre. Contrairement au précédent exemple de réalisation, les gorges d'évacuation 5 à 5" ne possèdent pas ici un profil arrondi.

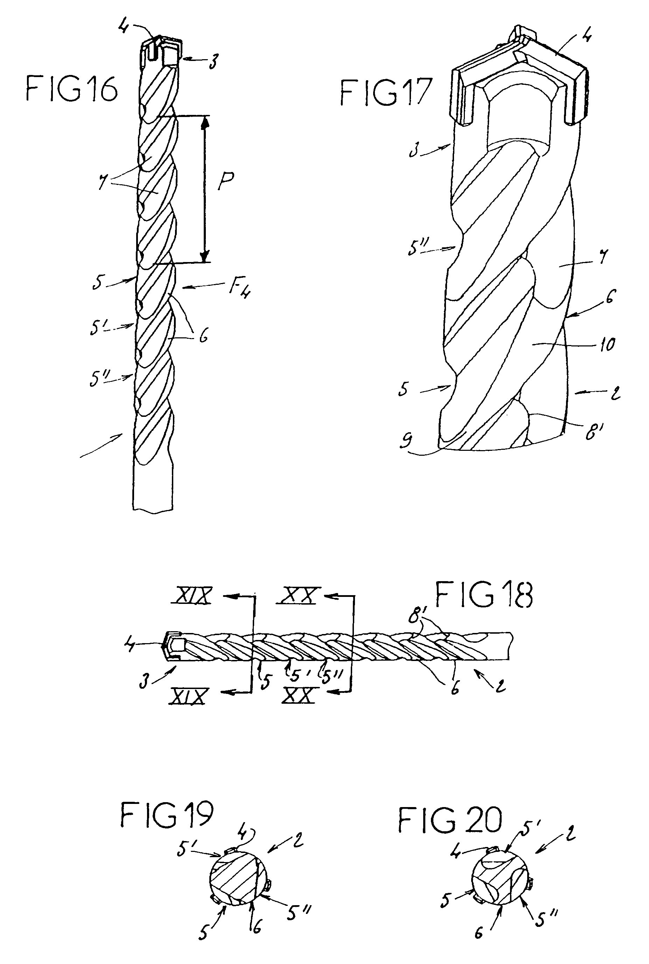

Enfin, les figures 16 à 20 illustrent une troisième variante, dans laquelle le corps de foret 2 présente trois gorges d'évacuation 5, 5' et 5", avec des facettes 7 comportant des raccordements 8' sans rayon, et définies par des génératrices présentant un décalage axial, mais sans décalage angulaire d'une gorge à l'autre. Les gorges d'évacuation 5, 5' et 5" possèdent ici un profil non arrondi.

L'on ne s'éloignerait pas du cadre de l'invention, telle que définie dans les revendications annexées :
- en modifiant le nombre des gorges d'évacuation des poussières, ménagées dans le corps du foret, ou la conformation de la tête de ce foret et de son insert en carbure, voire même en supprimant cet insert ;
- en modifiant le nombre des facettes délimitant lesdites gorges, ainsi que les formes de ces facettes, qui peuvent être simples ou complexes, étendues dans le sens de la longueur ou de la largeur, plates ou concaves ou convexes, etc...
- en réalisant les raccordements entre facettes selon tous rayons de courbure pouvant aller d'une valeur nulle (correspondant à une arête vive) à des valeurs élevées ;
- en réalisant les facettes et leurs raccordements par tous procédés d'usinage ou de formage ;
- en destinant et adaptant ce foret au perçage de tous types de matériaux : pierre, béton, métal...

## Revendications

1. - Foret de perçage, possédant un corps (2) de forme générale cylindrique, terminé par une tête (3), et disposant, sur au moins une partie de la longueur de son corps (2), d'une ou plusieurs gorges d'évacuation (5) généralement hélicoïdales, **caractérisé en ce que** la ou les gorges d'évacuation (5) sont délimitées, sur au moins une partie de leur longueur, par une succession de facettes (7), accolées les unes aux autres.

2. - Foret de perçage selon la revendication 1, **caractérisé en ce que** les facettes (7) des gorges d'évacuation (5) sont raccordées les unes aux autres par des arêtes vives (8').

3. - Foret de perçage selon la revendication 1, **caractérisé en ce que** les facettes (7) des gorges d'évacuation (5) sont raccordées les unes aux autres par des rayons de raccordement (8), de forme connexe ou concave.

4. - Foret de perçage selon l'une quelconque des revendications 1 à 3, **caractérisé en ce que** la succession de facettes (7) est agencée de manière à former, sur tout ou partie de la longueur de chaque gorge d'évacuation (5), une alternance de portions de profondeur et/ou de largeur moins importante, dites "couloirs de compression", et de portions de profondeur et/ou de largeur plus importante, dites "chambres de dépression".

5. - Foret de perçage selon l'une quelconque des revendications 1 à 4, **caractérisé en ce que** les listels (6), d'allure généralement hélicoïdale, séparant les gorges d'évacuation (5), présentent une alternance régulière ou non de zones étroites (9) et de zones larges (10).

6. - Foret de perçage selon l'une quelconque des revendications 1 à 5, **caractérisé en ce que** les génératrices définissant les facettes (7) et leurs raccordements (8 ; 8') présentent un décalage axial et un décalage angulaire, d'une gorge (5) à l'autre.

7. - Foret de perçage selon l'une quelconque des revendications 1 à 5, **caractérisé en ce que** les génératrices définissant les facettes (7) et leurs raccordements (8 ; 8') présentent un décalage axial, mais ne possèdent aucun décalage angulaire, d'une gorge (5) à l'autre.

## Claims

1. A perforating drill housing a body (2) of cylindrical overall shape, ending in a head (3) and having, over at least part of the length of its body (2), one or more generally spiral evacuation grooves (5), **characterized in that** the evacuation groove or grooves (5) are delimited, over at least part of their length, by a succession of facets (7) attached to one another.

2. The perforating drill as claimed in claim 1, **characterized in that** the facets (7) of the evacuation grooves (5) are joined together by sharp edges (8').

3. The perforating drill as claimed in claim 1, **characterized in that** the facets (7) of the evacuation grooves (5) are joined together by fillet radii (8) of convex or concave shape.

4. The perforating drill as claimed in any one of claims 1 to 3, **characterized in that** the succession of facets (7) is arranged in such a way as to form, over all or part of the length of each evacuation groove (5), an alternation of portions of lesser depth and/or width, known as "compression corridors" and portions of greater depth and/or width known as "depression chambers".

5. The perforating drill as claimed in any one of claims 1 to 4, **characterized in that** the margins (6), of generally spiral appearance, separating the evacuation grooves (5) exhibit a uniform or non-uniform alternation of narrow regions (9) and broad regions (10).

6. The perforating drill as claimed in any one of claims 1 to 5, **characterized in that** the generatrices defining the facets (7) and their connections (8; 8') exhibit an axial offset and an angular offset from one groove (5) to the next.

7. The perforating drill as claimed in any one of claims 1 to 5, **characterized in that** the generatrices defining the facets (7) and their connections (8; 8') exhibit an axial offset but have no angular offset from one groove (5) to the next.

## Patentansprüche

1. Bohrwerkzeug, das einen allgemein zylinderförmigen Körper (2) hat, der mit einem Kopf (3) endet, und das, zumindest auf einem Teil der Länge seines Körpers (2), eine oder mehrere, im allgemeinen spiralförmige Auskehlungen (5) zum Ausräumen hat, **dadurch gekennzeichnet, dass** die Auskehlung oder die Auskehlungen (5) zum Ausräumen über zumindest einen Teil ihrer Länge durch eine Abfolge von Facetten (7) begrenzt sind, die aufeinander folgen.

2. Bohrwerkzeug nach Anspruch 1, **dadurch gekennzeichnet, dass** die Facetten (7) der Auskehlungen (5) zum Ausräumen durch Grate (8') miteinander verbunden sind.

3. Bohrwerkzeug nach Anspruch 1, **dadurch gekennzeichnet, dass** die Facetten (7) der Auskehlungen (5) zum Ausräumen durch Verbindungsradien (8) mit konvexer oder konkaver Form miteinander verbunden sind.

4. Bohrwerkzeug nach einem der Ansprüche 1 bis 3, **dadurch gekennzeichnet, dass** die Abfolge von Facetten (7) so gestaltet ist, dass sie über die gesamte Länge jeder Auskehlung (5) zum Ausräumen, oder einen Teil davon, eine Wechselfolge von Abschnitten mit geringerer Tiefe und/oder Breite bildet, "Verdichtungsgänge" genannt, sowie von Abschnitten mit größerer Tiefe und/oder Breite, "Auflockerungskammern" genannt.

5. Bohrwerkzeug nach einem der Ansprüche 1 bis 4, **dadurch gekennzeichnet, dass** die im allgemeinen spiralförmigen Fasen (6), die die Auskehlungen (5) zum Ausräumen trennen, eine regelmäßige oder nicht regelmäßige Abfolge von schmalen Zonen (9) und breiten Zonen (10) aufweisen.

6. Bohrwerkzeug nach einem der Ansprüche 1 bis 5, **dadurch gekennzeichnet, dass** die Erzeugenden, die die Facetten (7) und ihre Verbindungen (8; 8') definieren, von einer Auskehlung (5) zur anderen eine axiale Verschiebung und eine Winkel-Verschiebung aufweisen.

7. Bohrwerkzeug nach einem der Ansprüche 1 bis 5, **dadurch gekennzeichnet, dass** die Erzeugenden, die die Facetten (7) und ihre Verbindungen (8; 8') definieren, von einer Auskehlung (5) zur anderen eine axiale Verschiebung, aber keine Winkel-Verschiebung aufweisen.
